(19)

**Europäisches Patentamt**
**European Patent Office**
**Office européen des brevets**

(11) **EP 4 593 371 A1**

(12) **EUROPEAN PATENT APPLICATION**

(43) Date of publication:
**30.07.2025  Bulletin 2025/31**

(51) International Patent Classification (IPC):
*H04N 9/31* (2006.01)

(21) Application number: **25151447.7**

(22) Date of filing: **13.01.2025**

(52) Cooperative Patent Classification (CPC):
**H04N 9/3188; H04N 9/317; H04N 9/3194**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.01.2024  CN 202410114727**

(71) Applicant: **Coretronic Corporation
Hsin-Chu 300 (TW)**

(72) Inventor: **KUO, Pen-Ning
300 Hsin-Chu (TW)**

(74) Representative: **Ter Meer Steinmeister & Partner
Patentanwälte mbB
Nymphenburger Straße 4
80335 München (DE)**

(54) **DRIVING DEVICE, PROJECTION DEVICE AND DRIVING METHOD THEREOF**

(57)  A driving device and a driving method are provided. The driving device includes a driving waveform signal generator and a control element. The driving waveform signal generator is configured to provide a driving waveform signal to an optical actuator according to waveform information provided by the control element. The control element is configured to generate updated waveform information based on a synchronization signal and the position information received from the sensor. The driving waveform signal generator provides an updated driving waveform signal to the optical actuator according to the updated waveform information, so that a maximum amplitude value of the driving waveform signal in an initial period is less than or equal to a maximum amplitude value of the driving waveform signal in a stable period.

FIG. 1

**Description**

This application claims the priority of China application serial no. 202410114727.6 filed on January 26, 2024.

BACKGROUND OF THE INVENTION

Field of the Invention

The invention relates to a driving device and a driving method, and in particular to a driving device and a driving method configured to control the positional shift of an optical path shift element of an optical actuator.

Description of Related Art

In the technical field of projectors, conventional techniques may improve the resolution of projectors via a pixel shift technique. However, the image pixel displacement generated by the pixel shift of the actuator may be varied due to tolerances of electronic or mechanical elements and environmental factors. When the variation affects the imaging quality, calibration is needed. However, the current driving device driving the actuator for pixel shift is an open-loop design, meaning that the driving device has been calibrated before leaving the factory. Once the driving device leaves the factory, monitoring of the image pixel displacement and compensation are not possible.

The driving device of the conventional techniques may not be adjusted in real time. Therefore, the output value output from the driving device to the actuator is directly set to equal to the target value. As a result, the actuator generates excessive vibration when it first moves, causing the driven optical element in the actuator to collide with surrounding mechanical members, thus causing noise issues.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the disclosure was acknowledged by a person of ordinary skill in the art.

SUMMARY OF THE INVENTION

The invention provides a driving device and a driving method that may effectively improve the stability of the positional shift of an optical path shift element of an optical actuator.

Other objectives, features and advantages of the present invention will be further understood from the further technological features disclosed by the embodiments of the present invention wherein there are shown and described preferred embodiments of this invention, simply by way of illustration of modes best suited to carry out the invention.

The object is solved by the features of the independent claims. Preferred embodiments are given in the dependent claims.

In order to achieve one, part, or all of the above objects or other objects, a driving device of the invention is configured to be coupled to an optical actuator. The optical actuator is configured to receive an image beam and has a sensor and an optical path shift element. The driving device includes a driving waveform signal generator and a control element. The driving waveform signal generator is coupled to the control element and the optical actuator. In particular, the driving waveform signal generator is configured to provide a driving waveform signal to the optical actuator according to waveform information. The optical actuator is configured to drive the optical path shift element to operate according to the driving waveform signal to shift the image beam. The control element is configured to generate updated waveform information based on a synchronization signal and the position information received from the sensor. The driving waveform signal generator provides an updated driving waveform signal to the optical actuator according to the updated waveform information, wherein the optical actuator, the driving waveform signal generator, and the control element form a first closed loop. In particular, a period during which the optical actuator drives the optical path shift element to operate includes an initial period and a stable period in order. The control element is configured to control a maximum amplitude value of the driving waveform signal in the initial period to be less than or equal to a maximum amplitude value of the driving waveform signal in the stable period.

In order to achieve one, part, or all of the above objects or other objects, a projection device includes the driving device and the optical actuator.

In order to achieve one, part, or all of the above objects or other objects, a driving method of the invention is configured to drive an optical actuator through a driving device. The optical actuator is configured to receive an image beam and has a sensor and an optical path shift element. The driving device includes a driving waveform signal generator and a control element. The driving method includes: providing a driving waveform signal to the optical actuator through the driving waveform signal generator according to waveform information, receiving the driving waveform signal and driving the optical path shift element to operate according to the driving waveform signal to shift the image beam through the optical actuator; sensing position information of the optical path shift element and feeding back the position information to the control element through the sensor; generating updated waveform information based on a synchronization signal and the position information through the control element, receiving and providing the updated waveform information through the driving waveform signal generator, and providing an updated driving waveform signal to the optical actuator according to the updated waveform information, wherein the optical actuator, the driving waveform signal generator, and the control element form a first closed loop; and wherein a period during which the optical path shift element is operated includes an initial period and a stable period in order, so that a maximum amplitude value of the driving waveform signal in the initial period is less than or equal to a maximum amplitude value of the driving waveform signal in the stable period.

In one or more embodiments, the control element may be configured to calculate a difference between the position information and initial position information to obtain movement information of the optical path shift element of the optical actuator.

In one or more embodiments, the control element may be configured to calculate a weighted average value of a portion of the movement information according to weighted information to obtain a first peak value and a second peak value corresponding to the portion of the movement information.

In one or more embodiments, the control element may be further configured to calculate an average value of the first peak value and the second peak value and generate an offset value of the movement information.

In one or more embodiments, the control element may be configured to calculate a difference between a first target value and the first peak value and a difference between a target offset value and the offset value to generate error information.

In one or more embodiments, the target offset value may be equal to an average of the first target value and a second target value.

In one or more embodiments, the control element may be configured to execute a control algorithm for the error information to generate the updated waveform information.

In one or more embodiments, the control element may comprise: an error information calculator configured to receive the position information from the sensor and calculate error information.

In one or more embodiments, the sensor may be configured to sense position information of the optical path shift element.

In one or more embodiments, the sensor may be configured to feed back the position information to the control element

In one or more embodiments, the control element may comprise a control circuit coupled to the error information calculator and configured to receive the error information and execute a control algorithm for the error information to generate offset information and gain information corresponding to the waveform information.

In one or more embodiments, the control element may comprise a waveform information generator coupled to the control circuit and configured to generate updated waveform information according to the offset information and the gain information.

In one or more embodiments, the error information calculator may comprises an average calculator.

In one or more embodiments, the error information calculator may be configured to calculate at least one of: a difference between the position information and initial position information to obtain movement information of the optical path shift element of the optical actuator; calculate a weighted average value of a portion of the movement information according to weighted information through the average calculator to obtain a first peak value and a second peak value of the portion of the movement information; calculate an average value of the first peak value and the second peak value through the average calculator and generate an offset value of the movement information; and calculate a difference between a first target value and the first peak value and a difference between a target offset value and the offset value to generate the error information.

In one or more embodiments, the control circuit may comprise at least one of a proportional control circuit, an integral control circuit, and a differential control circuit.

In one or more embodiments, the control circuit may be a robust control circuit, an adaptive control circuit, a fuzzy theory control circuit, a genetic algorithm control circuit, or a neural network-like control circuit.

In one or more embodiments, the control circuit may comprise a first control circuit configured to receive a gain error of the error information and execute the control algorithm for the gain error to generate updated gain information corresponding to the waveform information; and a second control circuit configured to receive a shift error of the error information and execute the control algorithm for the shift error to generate updated offset information corresponding to the waveform information.

In one or more embodiments, the control element may further comprise a clock generator configured to receive the synchronization signal and provide a clock signal to the error information calculator and the waveform information generator according to the synchronization signal.

In one or more embodiments, the control element ma further comprise a register.

In one or more embodiments, the register may be coupled to the waveform information generator, the waveform information generator is configured to receive segment length information from the register.

In one or more embodiments, the waveform information generator may be configured to control a duration of the offset information and the gain information of the waveform information in each time segment based on the segment length information and the clock signal.

In one or more embodiments, the driving waveform signal generator may comprise a signal format converter coupled to the control element and configured to convert a signal format of the waveform information and generate converted waveform information; and an amplifier coupled to the signal format converter and configured to amplify the converted waveform information to generate the driving waveform signal.

In one or more embodiments, the waveform information may be a digital signal, and the converted waveform information is an analog signal.

In one or more embodiments, the driving device may further comprise another driving waveform signal generator and another control element.

In one or more embodiments, the optical actuator may have another sensor.

In one or more embodiments, the optical actuator, the other driving waveform signal generator, and the other control element may form a second closed loop.

In one or more embodiments, the optical actuator may be configured to drive the optical path shift element to swing around a first axial direction according to the driving waveform signal from the first closed loop, drive the optical path shift element to swing around a second axial direction according to the driving waveform signal from the second closed loop.

In one or more embodiments, the first axial direction may be different from the second axial direction.

In one or more embodiments, the sensor of the optical actuator may be a magnetic flux sensor.

In one or more embodiments, the target offset value may be equal to an average value of the first target value and a second target value.

In one or more embodiments, the driving method may further comprise executing a control algorithm for the error information to generate the waveform information through the control element.

In one or more embodiments, the driving method may further comprise generating a clock signal according to the synchronization signal through the control element; and controlling a duration of offset information and gain information of the waveform information in each time segment based on segment length information and the clock signal through the control element.

Based on the above, the driving device of the invention provides a closed-loop system sensing the position information of the optical path shift element via the sensor. Moreover, according to the position information, the waveform information is dynamically adjusted based on the synchronization signal, and then a dynamically adjusted driving waveform signal is generated according to the waveform information to control the operation of the optical path shift element. In particular, the period during which the driving device of the invention drives the optical path shift element includes the initial period and the stable period in order. The driving device of the invention ensures that the maximum amplitude of the driving waveform signal in the initial period is not greater than the maximum amplitude in the stable period, thereby stabilizing the positional shift of the optical path shift element.

## BRIEF DESCRIPTION OF THE DRAWINGS

FIG. 1 shows a schematic diagram of a projection device of an embodiment of the invention.
FIG. 2 shows a detailed schematic diagram of the driving device of FIG. 1.
FIG. 3A shows a schematic diagram of waveform information provided by a waveform information generator in an embodiment of the invention.
FIG. 3B shows a partially enlarged schematic diagram of the waveform information in FIG. 3A.
FIG. 4 shows an operation waveform diagram in the initial period of an embodiment of the invention.
FIG. 5 shows an operation waveform diagram in the initial period and the stable period and a schematic diagram of changes in gain value and offset value of an embodiment of the invention.
FIG. 6 shows a schematic diagram of a driving device of another embodiment of the invention.
FIG. 7 shows a schematic flowchart of a driving method of an embodiment of the invention.

## DESCRIPTION OF THE EMBODIMENTS

It is to be understood that other embodiment may be utilized and structural changes may be made without departing from the scope of the appended claims. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted," and variations thereof herein are used broadly and encompass direct and indirect connections, couplings, and mountings.

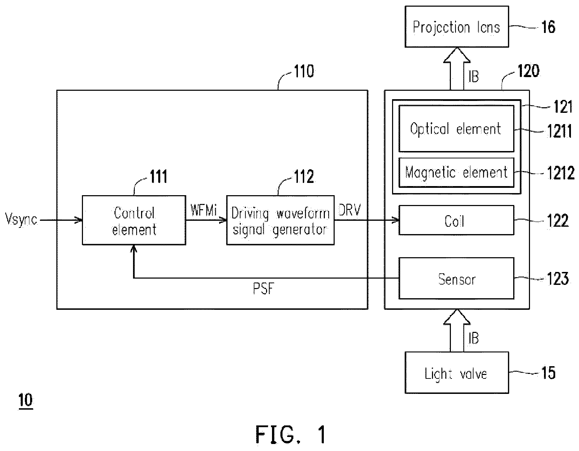

Please refer to FIG. 1. FIG. 1 shows a schematic diagram of a projection device of an embodiment of the invention. A projection device 10 (e.g., a projector) includes a driving device 110 and an optical actuator 120. The driving device 110 is coupled to the optical actuator 120 and configured to drive the optical actuator 120. In the present embodiment, the optical actuator 120 is configured to receive an image beam IB, and the optical actuator 120 includes an optical path shift element 121 and a sensor 123. The sensor 123 is a magnetic flux sensor and coupled to the driving device 110. The magnetic flux sensor 123 is, for example, a Hall sensor.

In an embodiment, the optical actuator 120 may further include a magnetic element 1212 and a coil 122. The optical path shift element 121 may, for example, include an optical element 1211 and a frame (not shown) configured to fix the optical element 1211. The magnetic element 1212 is disposed on the frame configured to fix the optical element 1211 and the magnetic element 1212 is configured to vibrate back and forth with at least one axis as the axis center together with the optical element 1211. The optical element 1211 may be, for example, a light-transmitting element or a reflective element, configured to receive the image beam IB and allowing the image beam IB to pass through or reflect the image beam IB to adjust the projection position of the image beam IB by shifting (or changing) the transmission path of the image beam IB. In the present embodiment, the optical element 1211 may be, for example, a light-transmitting sheet configured to receive the image beam IB and allowing the image beam IB to pass through. The position of the optical path shift element 121 may be dynamically adjusted, the transmission path of the image beam IB may be shifted corresponding to the positional shift of the optical path shift element 121. The sensor 123 is configured to sense the operation of the optical path shift element 121 and feed back the position information of the optical path shift element 121 to the driving device 110. Thereby, according to the feedback information from the sensor 123, the driving device 110 may adjust the position of the optical path shift element 121 to shift the position of each pixel in the projection image, thereby improving the resolution of the projection image. The projection device further includes a light valve 15 and a projection lens 16. The image beam IB is generated by a light valve 15 converting an illumination beam (not shown). For the method with which the light valve 15 converts the illumination beam into the image beam IB, sufficient teachings, suggestions, and implementation instructions of the detailed steps and implementation methods thereof may be obtained from common knowledge in the art, and therefore is not described again. The light valve 15 is, for example, a reflective light modulator such as a liquid crystal on silicon panel (LCoS panel) or a digital micro-mirror device (DMD). In some embodiments, the light valve 15 may also be a transmissive light modulator such as a transparent liquid-crystal panel, an electro-optical modulator, a magneto-optic modulator, or an acousto-optic modulator (AOM). The invention does not limit the configuration and the type of the light valve 15. It should be added that the light valve 15 may be controlled by a light valve controller (not shown) to modulate the image beam IB according to a plurality of sub-frames, wherein the light valve controller is, for example, a digital light processor (DLP), and a plurality of time periods in each sub-display frame respectively correspond to displaying image beams of different colors. The sub-display frames represent projection images projected sequentially. A projection lens 16 is disposed on the transmission path of the image beam IB and configured to project the image beam IB. The projection lens 16 includes, for example, a combination of one or a plurality of optical lenses having a diopter, including, for example, various combinations of a non-planar lens such as a biconcave lens, a lenticular lens, a concave-convex lens, a convex-concave lens, a plano-convex lens, a plano-concave lens, and the like, but not limited thereto.

In the present embodiment, the coil 122 may be disposed adjacent to the magnetic element 1212 of the optical path shift element 121. For example, the coil 122 is disposed on the base (not shown) of the optical path shift element 121. When the optical path shift element 121 is driven, the optical element 1211 and the magnetic element 1212 may vibrate back and forth relative to the base and the coil 122. The coil 122 is coupled to the driving device 110 and configured to generate an induced magnetic field by receiving a driving waveform signal DRV generated by the driving device 110. The magnetic element 1212 fixed at the optical element 1211 may link the optical element 1211 according to the induced magnetic field generated by the coil 122, thereby causing the optical path shift element 121 to move in position. The magnetic element 1212 is, for example, a magnet.

In the present embodiment, the driving device 110 includes a control element 111 and a driving waveform signal generator 112. The control element 111 is coupled to the driving waveform signal generator 112 and the sensor 123 of the optical actuator 120. The optical actuator 120, the driving waveform signal generator 112, and the control element 111 form a closed loop (first closed loop).

In an embodiment, the driving waveform signal generator 112 may, for example, be coupled to the coil 122 of the optical actuator 120. The driving waveform signal generator 112 may provide the driving waveform signal DRV to the optical actuator 120 according to waveform information WFMi. The optical actuator 120 is configured to drive the optical path shift element 121 to operate according to the driving waveform signal DRV to shift the image beam IB. The sensor 123 is configured to dynamically sense the position state of the optical path shift element 121 and thereby generate position information PSF. For example, the sensor 123 is configured to sense the displacement of the magnetic element 1212 of the optical path shift element 121 according to the change of the magnetic field to generate the position information PSF. The sensor 123 feeds back the position information PSF to the control element 111 of the driving device 110.

The control element 111 is configured to receive a synchronization signal Vsync from a light valve controller (not shown). The control element 111 may generate updated waveform information WFMi based on the synchronization signal Vsync and the position information PSF. The control element 111 may calculate the difference between the initial position information of the optical path shift element 121 (for example, the position information of the optical path shift element 121 when the optical path shift element 121 is stationary) and the position information PSF (obtained in real time) to generate movement information of the optical path shift element 121. The control element 111 may perform a calculation operation for the movement information to generate the updated waveform information WFMi. The synchronization signal Vsync may be a vertical synchronization signal well known to those skilled in the art, that is, a synchronization signal corresponding to a plurality of sub-display frames, and one display frame contains a plurality of sub-display frames. In an embodiment, the control element 111 may be, for example, a field-programmable gate array (FPGA), a microcontroller (MCU), or other devices having computing and processing capabilities.

The driving waveform signal generator 112 may update the driving waveform signal DRV according to the updated waveform information WFMi generated in real time by the control element 111 and transmit the updated driving waveform signal DRV to the optical actuator 120, and dynamically adjust the position state of the optical path shift element 121 of the optical actuator 120 by providing the real-time updated driving waveform signal DRV.

In the present embodiment, a period during which the optical actuator 120 drives the optical path shift element 121 to operate includes an initial period and a stable period in order. The control element 111 is configured to control a maximum amplitude value of the driving waveform signal DRV in the initial period to be less than or equal to a maximum amplitude value of the driving waveform signal DRV in the stable period. In other words, the driving device 110 forms a closed loop control mechanism with the optical actuator 120, and via the closed-loop control mechanism, the maximum amplitude of the corresponding driving waveform signal DRV in the initial period during which the optical path shift element 121 is operated may be made less than or equal to the maximum amplitude of the corresponding driving waveform signal DRV in the stable period during which the optical path deviation element 121 is operated. The initial period and the stable period during which the optical path shift element 121 is operated are defined in time sequence. The initial period is, for example, the time when the driving circuit 110 starts to drive the optical actuator 120. During this period, various values (such as gain value and offset value, etc.) are in an unstable state (for example, the slope of the linear relationship between the value and time is not zero). The stable period is, for example, when the slope of the linear relationship between various values and time is equal to zero or approaches zero. In this way, the swing amount of the optical path shift element 121 may be effectively controlled, without causing excessive oscillation in the initial state, and noise due to collision with surrounding elements may be avoided.

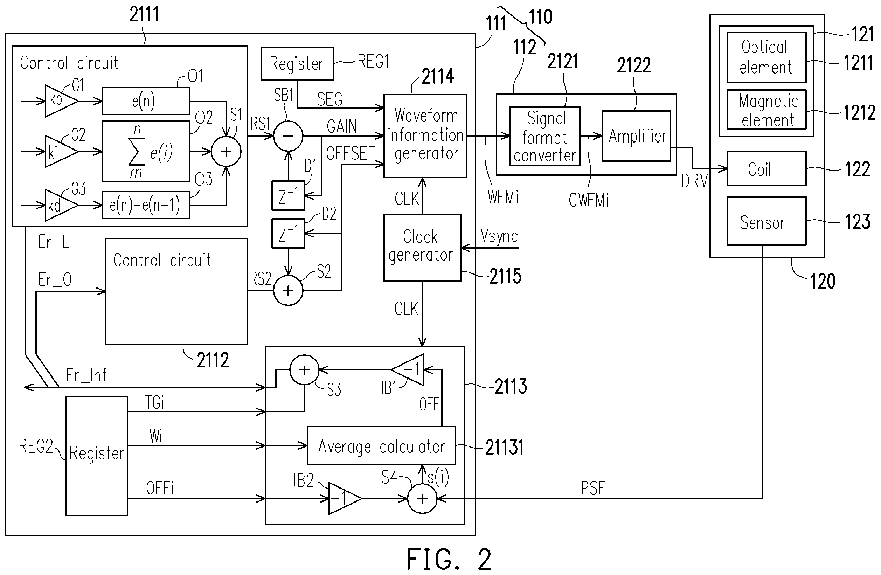

Please refer to FIG. 2. FIG. 2 shows a detailed schematic diagram of the driving device of FIG. 1. It may be understood that the element names defined in FIG. 2 that are the same as those defined in FIG. 1 represent the same elements, and therefore are not described again here. The driving device 110 is coupled to the optical actuator 120. In the present embodiment, the optical actuator 120 includes the optical path shift element 121, the coil 122, the magnetic element 1212, and the sensor 123. The optical path shift element 121 includes the optical element 1211. The driving device 110 includes the control element 111 and the driving waveform signal generator 112.

The driving waveform signal generator 112 may, for example, include a signal format converter 2121 and an amplifier 2122. The signal format converter 2121 is coupled to the control element 111 and configured to convert the signal format of the waveform information WFMi to generate converted waveform information CWFMi. In the present embodiment, the signal format converter 2121 may be a digital to analog converting circuit (DAC). The waveform information WFMi is a digital signal, and the converted waveform information CWFMi is an analog signal. The amplifier 2122 is coupled to the output end of the signal format converter 2121, the amplifier 2122 receives the converted waveform information CWFMi and generates the driving waveform signal DRV by amplifying the converted waveform information CWFMi, and sends the driving waveform signal DRV to the optical actuator 120 to drive the optical path shift element 121.

Please continue to refer to FIG. 2. The control element 111 may, for example, include control circuits 2111 and 2112, an error information calculator 2113, a waveform information generator 2114, and a clock generator 2115. The error information calculator 2113 receives the position information PSF from the sensor 123 and calculates error information Er_inf. The control circuits 2111 and 2112 are respectively coupled to the error information calculator 2113 to receive the error information Er_inf and execute a control algorithm for the error information Er_inf to generate offset information OFFSET and gain information GAIN corresponding to the waveform information WFMi. The waveform information generator 2114 is coupled to the control circuits 2111 and 2112 and configured to generate the updated waveform information WFMi according to the offset information OFFSET and the gain information GAIN. In other words, the control element 111 may execute the above control algorithm for the error information Er_inf to adjust the waveform of the signal, so as to generate the updated waveform information WFMi, and convert the updated waveform information WFMi into an updated driving waveform signal DRV via the driving waveform signal generator 112. The driving waveform signal generator 112 transmits the updated driving waveform signal DRV to the optical actuator 120 to drive the optical path shift element 121. Thereby, the control element 111 is configured to control the maximum amplitude value of the driving waveform signal DRV in the initial period to be less than or equal to the maximum amplitude value of the driving waveform signal DRV in the stable period.

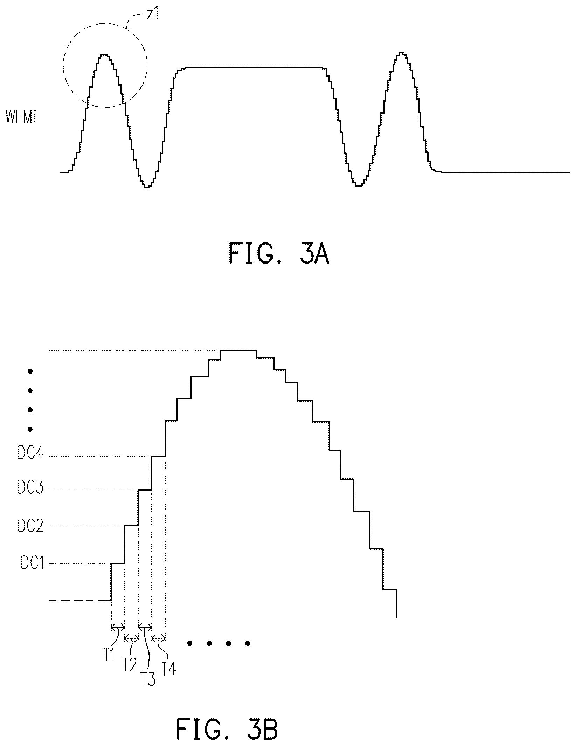

Regarding the waveform information generator 2114, please refer to FIG. 2 and FIG. 3A simultaneously, wherein FIG. 3A shows a schematic diagram of waveform information provided by a waveform information generator in an embodiment of the invention, and FIG. 3B shows a partial enlarged schematic diagram of the waveform information in FIG. 3A. In FIG. 3A, the waveform information WFMi provided by the waveform information generator 2114 may be a discrete signal. The waveform information WFMi represents the expected waveform of the driving waveform signal DRV in one display frame period.

In FIG. 3B, by partially amplifying an area Z1 of the waveform information WFMi, the waveform information WFMi provided by the waveform information generator 2114 may correspond to a plurality of time intervals T1, T2, T3, T4, ..., and have a plurality of amplitude values DC1, DC2, DC3, DC4,... corresponding to the plurality of time intervals T1, T2, T3, T4,... respectively. In the present embodiment, the amplitude values DC1, DC2, DC3, DC4, ... may each be a plurality of digital values. The waveform information generator 2114 may generate the waveform information WFMi by generating digital codes of the plurality of amplitude values DC1, DC2, DC3, DC4,... corresponding to the plurality of time intervals T1, T2, T3, T4,... respectively.

Please refer to FIG. 2 again. The waveform information generator 2114 may receive the offset information OFFSET, the gain information GAIN, and segment length information SEG to generate the waveform information WFMi. The waveform information generator 2114 may set the duration of each time interval T1, T2, T3, T4, ... according to the segment length information SEG; set the magnitude of each amplitude value DC1, DC2, DC3, DC4,... according to the gain information GAIN. That is, the waveform information generator 2114 may determine whether the amplitude of the waveform information WFMi of each time period is rising or falling according to the segment length information SEG and the gain information GAIN. The waveform information generator 2114 may further set the zero point of the waveform information WFMi according to the offset information OFFSET. The waveform information generator 2114 may control the duration of the offset information OFFSET and the gain information GAIN of the waveform information WFMi in each time segment based on the segment length information SEG and a received clock signal CLK.

In an embodiment, the control element 111 may further include a register REG1. The segment length information SEG may be stored in a register REG1 in advance and provided by the register REG1. The details of generating the offset information OFFSET and the gain information GAIN are described in detail in later embodiments.

The error information calculator 2113 includes buffers IB1 and IB2, adders S3 and S4, and an average calculator 21131. The buffer IB2 receives initial position information OFFi, and the buffer IB2 has a gain value of -1 to generate the product of the initial position information OFFi and -1. The adder S4 receives the output signal of the buffer IB2 and the position information PSF from the sensor 123. The adder S4 is configured to calculate the difference between the position information PSF and the initial position information OFFi, and thereby generate movement information s(i) of the optical path shift element 121. The average calculator 21131 is coupled to the adder S4 and receives the movement information s(i) and weighted information Wi. The average calculator 21131 performs weighted calculation for a portion of the movement information s(i) according to the weighted information Wi and generates a first peak value and a second peak value of the portion of the movement information s(i) by calculating the weighted average value of the portion of the movement information s(i). The average calculator 21131 may calculate the average value of the first peak value and the second peak value and obtain the offset value OFF of the movement information s(i).

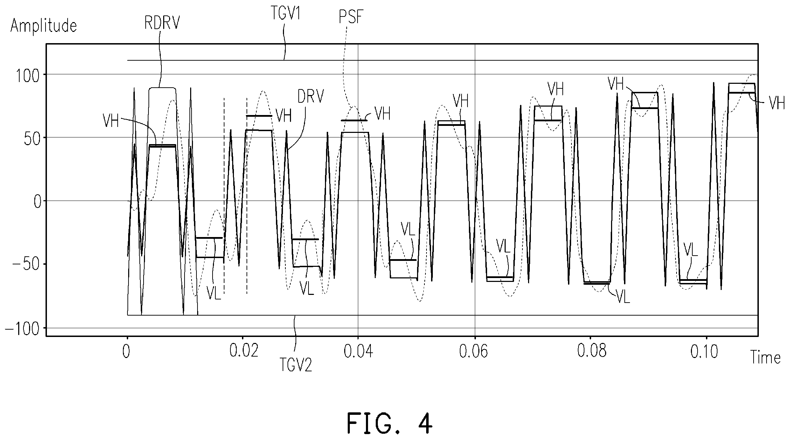

For the calculation details of the first peak value and the second peak value, please refer to FIG. 2 and FIG. 4 simultaneously. FIG. 4 shows an operation waveform diagram in the initial period of an embodiment of the invention. It should be noted that the operation waveform diagram in the initial period of FIG. 4 refers to the corresponding waveform diagram during the operation of the driving circuit 110 of FIG. 2 in the initial period. The waveform information generator 2114 has a preset waveform RDRV and may correspondingly output the waveform information WFMi according to, for example, the offset information OFFSET, the gain information GAIN, and the segment length information SEG. The average calculator 21131 may have a preset first target value TGV1 and second target value TGV2. The first target value TGV1 and the second target value TGV2 are respectively the positive target peak value and the negative target peak value of the driving waveform signal DRV. The average value of the first target value TGV1 and the second target value TGV2 may be the target offset value.

In FIG. 4, the movement information s(i) may be generated by subtracting the initial position information OFFi from the position information PSF. The average calculator 21131 may further perform a filtering operation for the movement information s(i), and obtain a first peak value VH by calculating the average value of the positive half-wave of the movement information s(i) and obtain a second peak value VL by calculating the average value of the negative half-wave of the movement information s(i). The average calculator 21131 may further calculate the average value of the first peak value VH and the second peak value VL and generate an offset value of the movement information s(i).

The error information calculator 2113 receives target information TGi (the target information TGi may include the first target value TGV1 and the target offset value), and via the buffer IB1 having a gain of -1 and the adder S3, subtracts the offset value OFF from the target information TGi to generate the error information Er_inf. The error information calculator 2113 may generate the error information Er_inf by calculating the difference between the first target value TGV1 and the first peak value VH and the difference between the target offset value and the offset value OFF. In the present embodiment, the error information Er_inf includes a gain error Er_L and an offset error Er_O. The gain error Er_L may be generated according to the difference between the first target value TGV1 and the first peak value VH, and the offset error Er_O may be generated according to the difference between the target offset value and the offset value OFF.

In an embodiment, the target information TGi, the weighted information Wi, and the initial position information OFFi may be stored in a register REG2 in advance.

Regarding the details of the weighted calculation, by setting the value of the weighted information Wi appropriately, the timing window during which the average calculator 21131 performs filtering operation on the movement information s(i) may be set. The timing window corresponds to, for example, a time period during the movement cycle of the optical actuator 120 excluding the time period during which the optical actuator 120 moves. That is, the time of the timing window is, for example, less than or equal to the time during which the optical actuator 120 is in a stable state (for example, after moving to the fixed point). In the present embodiment, the average calculator 21131 may calculate the weighted average of the portion of movement information s(i) (e.g., the movement information s(i) corresponding to the timing window) according to the weighted information Wi to obtain the first peak value VH and the second peak value VL. For example, the value of the weighted information Wi outside the timing window may be set equal to 0, and the value of the weighted information Wi within the timing window may be set to a real number greater than 0. When the average calculator 21131 is to calculate the first peak value VH, an appropriate timing window may be set for the positive half-wave of the movement information s(i). For example, the timing window includes n1 time points, and n1 is any positive integer greater than 1. The average calculator 21131 may calculate the first peak value VH = $\sum_{n1}$ s(i) $\times$ wi, wherein $\sum_{n1}$ wi = 1.

Moreover, when the average calculator 21131 is to calculate the second peak value VL, an appropriate timing window for the negative half-wave of the movement information s(i) may be set (that is, calculating according to a portion of the movement information s(i)). For example, the timing window includes n2 time points, and n2 is any positive integer greater than 1. The average calculator 21131 may calculate the second peak value VL = $\sum_{n2}$ s(i) $\times$ wi, wherein $\sum_{n2}$ wi = 1.

Please continue to refer to FIG. 2. The control circuit 2111 and the control circuit 2112 may have similar circuit architectures but are not limited thereto. In some embodiments, the control circuit 2111 is substantially the first control circuit 2111, and the control circuit 2112 is substantially the second control circuit 2112. That is, the control circuits 2111 and 2112 may substantially include the first control circuit 2111 and the second control circuit 2112. The gain error Er_L and the offset error Er_O are transmitted to the first control circuit 2111 and the second control circuit 2112 respectively. In the present embodiment, the first control circuit 2111 and the second control circuit 2112 may be proportional-integral-derivative control circuits (PID control circuits). Taking the first control circuit 2111 as an example, the first control circuit 2111 may have gain stages G1 to G3 and operation stages O1 to O3. The gain stages G1 to G3 are coupled to the operation stages O1 to O3 respectively. The gain stages G1 to G3 respectively provide gain values Kp, Ki, and Kd to modulate the gain error Er_L. The modulated gain error Er_L is sent to the operation stages O1 to O3 to perform proportional operation (e(n)), integral operation (

$$\sum_{m}^{n} e(i)$$

), and differential operation (e(n) - e(n-1)) respectively, and then the operation results are added via the adder S1 to generate a signal RS1. In particular, e(n), e(n-1), and e(i) are the gain errors Er_L. The control algorithm provided by the first control circuit 2111 is only an example and not a limitation.

Outside the first control circuit 2111, the signal RS1 (output by the first control circuit 2111) together with the cumulative subtraction operation of a delayer D1 and a subtractor SB1 may generate the gain information GAIN. In other words, the first control circuit 2111 receives the gain error Er_L in the error information Er_inf and executes a control algorithm for the gain error Er_L to generate updated gain information GAIN corresponding to the waveform information WFMi.

The second control circuit 2112 may perform an operation according to the offset error Er_O to generate a signal RS2. Outside the second control circuit 2112, the signal RS2 (output by the second control circuit 2112) together with the cumulative addition operation of a delayer D2 and an adder S2 may generate the offset information OFFSET. In other words, the second control circuit 2112 may receive the offset error Er_O in the error information Er_inf, and executes a control algorithm for the offset error Er_O to generate updated offset information OFFSET corresponding to the waveform information WFMi.

In other embodiments of the invention, each of the control circuits 2111 and 2112 may further include only at least any one or any two of a proportional control circuit, an integral control circuit, and a differential control circuit. Or, each of the control circuits 2111 and 2112 may also be a robust control circuit, an adaptive control circuit, a fuzzy theory control circuit, a genetic algorithm control circuit, or a neural network-like control circuit, but the invention is not limited thereto.

In an embodiment, the clock generator 2115 receives the synchronization signal Vsync and generates the clock signal CLK according to the synchronization signal Vsync. The synchronization signal Vsync is configured to indicate the beginning of each display frame period. The clock generator 2115 provides the generated clock signal CLK to the waveform information generator 2114 and the error information calculator 2113 as the working clock of the waveform information generator 2114 and the error information calculator 2113.

The clock signal CLK may be a sub-frame clock signal. In an embodiment of the invention, one display frame may be divided into a plurality of sub-display frames and configured to improve the resolution of the projected projection image. One display frame may, for example, be divided into two sub-display frames, or divided into four sub-display frames, but not limited thereto.

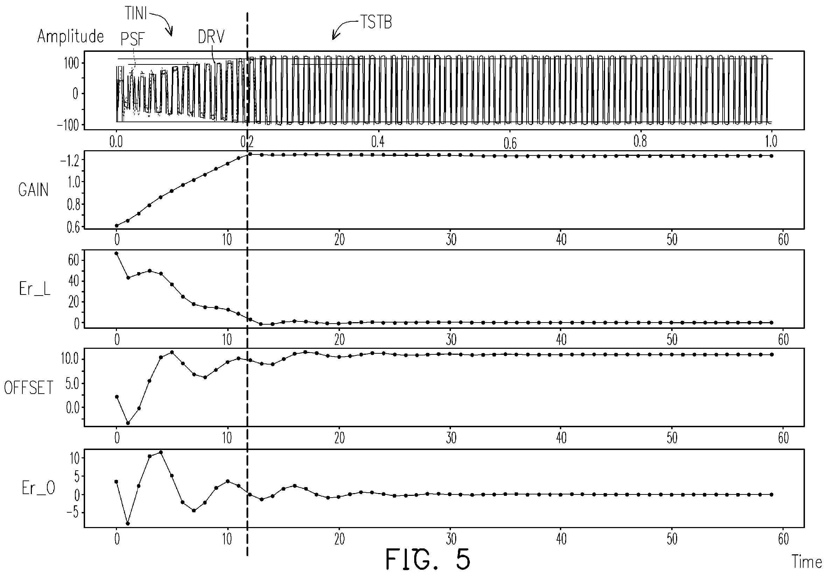

Please refer to FIG. 5 below. FIG. 5 shows an operation waveform diagram in the initial period and the stable period and a schematic diagram of changes in gain value and offset value of an embodiment of the invention. It should be noted that the operation waveform diagram in the initial period and the stable period of FIG. 5 refers to the corresponding waveform diagram during the operation of the driving circuit 110 of FIG. 2 in the initial period and the stable period. In the present embodiment, the gain information GAIN may be increased with time in an initial period TINI during which the optical path shift element 121 is operated, and may be a substantially stable value in a stable period TSTB during which the optical path shift element 121 is operated. The offset information OFFSET may oscillate up and down in the initial period, and approaches a stable value over time, and is substantially a stable value in the stable period TSTB. The gain error Er_L and the offset error Er_O may approach 0 in the stable period TSTB.

In the initial period TINI, the maximum amplitude of the driving waveform signal DRV may be less than or equal to the maximum amplitude of the driving waveform signal DRV in the stable period TSTB. In other words, via the closed-loop control mechanism of an embodiment of the invention, the driving waveform signal DRV may be effectively prevented from generating excessive surges in the initial period TINI, and the optical path shift element 121 may be prevented from generating unstable vibrations.

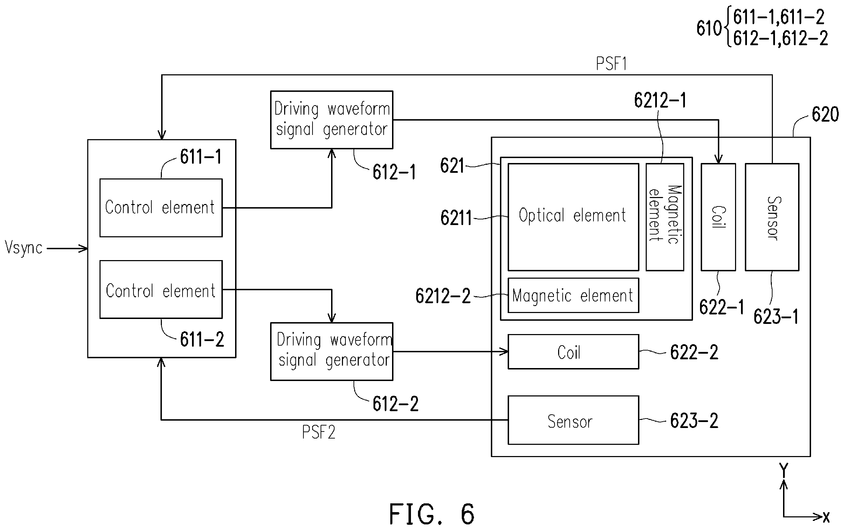

Please refer to FIG. 6 below. FIG. 6 shows a schematic diagram of a driving device of another embodiment of the invention. It may be understood that the element names defined in FIG. 6 that are the same as those defined in FIG. 1 represent the same elements, and therefore are not described again here. A driving device 610 is coupled to an optical actuator 620. Compared to FIG. 1, the driving device 610 further includes another driving waveform signal generator 612-1 and another control element 611-1. The optical actuator 620 has another sensor 623-1. The optical actuator 620, the other driving waveform signal sensor 612-1, and the other control element 611-1 form a second closed loop. That is, the driving device 610 of the present embodiment includes control elements 611-1 and 611-2 and driving waveform signal generators 612-1 and 612-2. The optical actuator 620 includes an optical path shift element 621, coils 622-1 and 622-2, magnetic elements 6212-1 and 6212-2, and sensors 623-1 and 623-2. The optical path shift element 621 includes an optical element 6211. In the present embodiment, the optical path shift element 621 may vibrate back and forth in the first axial direction as the rotating axis and/or vibrate back and forth in the second axial direction as the rotating axis. The coil 622-1 may provide an induced magnetic field to induce the magnetic element 6212-1 to cause the optical path shift element 621 to vibrate back and forth with the first axis as the rotation axis, and the coil 622-2 may provide an induced magnetic field to induce the magnetic element 6212-2 to cause the optical path shift element 621 to vibrate back and forth with the second axis as the rotation axis.

The sensors 623-1 and 623-2 are respectively configured to sense position information PSF1 and PSF2 of the optical path shift element 621 corresponding to the first axial vibration and the second axial vibration. The control element 611-2, the driving waveform signal generator 612-2, and the optical actuator 620 are similar to FIG. 1 and may form a first closed loop, and the control element 611-1, the driving waveform signal generator 612-1, and the optical actuator 620 may form a second closed loop. The first axial direction and the second axial direction are different. For example, the first axial direction is, for example, parallel to the X-axis, and the second axial direction is, for example, parallel to the Y-axis. The intersection point of the first axial direction and the second axial direction is, for example, the geometric center of the optical element 1211. The coil 622-1 and the magnetic element 6212-1 are, for example, disposed along the first axial direction, and the coil 622-2 and the magnetic element 6212-2 are, for example, disposed along the second axial direction.

The control elements 611-1 and 611-2 may be operated based on the synchronization signal Vsync. The circuit details and operating principles of the first closed loop and the second closed loop are all the same as the closed loop control mechanism formed by the driving device 110 of the embodiment of FIG. 2, so they are not described again here.

The driving device of an embodiment of the invention may further be expanded to have a larger number of closed loops, thereby providing a control mechanism having a plurality of optical actuators.

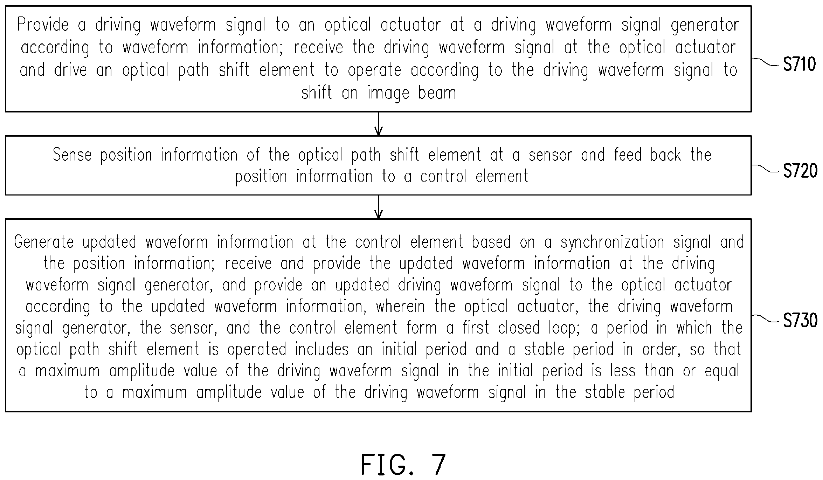

Please refer to FIG. 7 below. FIG. 7 shows a schematic flowchart of a driving method of an embodiment of the invention. The driving method is configured to drive an optical actuator through a driving device. The optical actuator is configured to receive an image beam and has a sensor and an optical path shift element. The driving device includes a driving waveform signal generator and a control element. In step S710, according to waveform information, a driving waveform signal is provided to an optical actuator at a driving waveform signal generator; and the driving waveform signal is received and an optical path shift element of the optical actuator is driven to operate according to the driving waveform signal to shift an image beam through the optical actuator. In step S720, position information of the optical path shift element is sensed at a sensor and the position information is fed back to a control element. In step S730, based on a synchronization signal and the position information, updated waveform information is generated through the control element; the updated waveform information is received and provided through the driving waveform signal generator, and an updated driving waveform signal is provided to the optical actuator according to the updated waveform information, wherein the optical actuator, the driving waveform signal generator, and the control element form a first closed loop, so that a maximum amplitude value of the driving waveform signal in an initial period is less than or equal to a maximum amplitude value of the driving waveform signal in a stable period.

The operation details of steps S710 to S730 have been described in detail in the foregoing embodiments, and are not described again here.

Based on the above, the driving device of the invention forms the closed loop with the sensor on the optical actuator, and controls the swing state of the optical path shift element via the closed loop control mechanism. By making the maximum amplitude value of the driving waveform signal in the initial period of the operation of the optical path shift element less than or equal to the maximum amplitude value of the driving waveform signal in the stable period of the operation of the optical path shift element, excessive swinging of the optical path shift element reducing the performance of the image display may be effectively prevented.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the present invention as defined by the following claims. Moreover, no element and component in the present disclosure is intended to be dedicated to the public regardless of whether the element or component is explicitly recited in the following claims.

## Claims

1. A driving device (110), configured to be coupled to an optical actuator (120), wherein the optical actuator (120) is configured to receive an image beam (IB) and has a sensor (123) and an optical path shift element (121),

   the driving device (110) comprises a driving waveform signal generator (112) and a control element (111),
   the driving waveform signal generator (112) is coupled to the control element (111) and the optical actuator (120), wherein,
   the driving waveform signal generator (112) is configured to provide a driving waveform signal (DRV) to the optical actuator (120) according to waveform information (WFMi), and the optical actuator (120) is configured to drive the optical path shift element (121) to operate according to the driving waveform signal (DRV) to shift the image beam (IB); and
   the control element (111) is configured to generate updated waveform information (WFMi) based on a synchronization signal (Vsync) and position information (PSF) received from the sensor (123); and
   the driving waveform signal generator (112) is configured to provide an updated driving waveform signal (DRV) to the optical actuator (120) according to the updated waveform information (WFMi),
   wherein the optical actuator (120), the driving waveform signal generator (112), and the control element (111) form a first closed loop;
   wherein a period during which the optical actuator (120) drives the optical path shift element (121) to operate comprises an initial period (TINI) and a stable period (TSTB) in order, and the control element (111) is configured to control a maximum amplitude value of the driving waveform signal (DRV) in the initial period (TINI) to be less than or equal to a maximum amplitude value of the driving waveform signal (DRV) in the stable period (TSTB).

2. The driving device of claim 1, wherein the control element (111) is configured to calculate a difference between the position information (PSF) and initial position information (OFFi) to obtain movement information s(i) of the optical path shift element (121) of the optical actuator (120), the control element (111) is configured to calculate a weighted average value of a portion of the movement information s(i) according to weighted information (Wi) to obtain a first peak value (VH) and a second peak value (VL) corresponding to the portion of the movement information s(i), and the control element (111) is further configured to calculate an average value of the first peak value (VH) and the second peak value (VL) and generate an offset value (OFF) of the movement information s(i).

3. The driving device of claim 2, wherein the control element (111) is configured to calculate a difference between a first target value (TGV1) and the first peak value (VH) and a difference between a target offset value and the offset value (OFF) to generate error information,
preferably the target offset value is equal to an average of the first target value (TGV1) and a second target value (TGV2).

4. The driving device of claim 1, 2 or 3, wherein the control element (111) is configured to execute a control algorithm for the error information to generate the updated waveform information (WFMi).

5. The driving device of any one of the preceding claims, wherein the control element (111) comprises:

    an error information calculator (2113) configured to receive the position information (PSF) from the sensor (123) and calculate error information (ER_Inf);
    a control circuit (2111,2112) coupled to the error information calculator (2113) and configured to receive the error information (ER_Inf) and execute a control algorithm for the error information to generate offset information (OFFSET) and gain information (GAIN) corresponding to the waveform information (WFMi); and
    a waveform information generator (2114) coupled to the control circuit (2111,2112) and configured to generate updated waveform information (WFMi) according to the offset information (OFFSET) and the gain information (GAIN),
    preferably the control circuit (111) comprises at least one of a proportional control circuit, an integral control circuit, and a differential control circuit and/or the control circuit (111) is a robust control circuit, an adaptive control circuit, a fuzzy theory control circuit, a genetic algorithm control circuit, or a neural network-like control circuit.

6. The driving device of claim 5, wherein the error information calculator (2113) comprises an average calculator (21131), and the error information calculator (2131) is configured to:

    calculate a difference between the position information (PSF) and initial position information (OFFi) to obtain movement information s(i) of the optical path shift element (121) of the optical actuator (120);
    calculate a weighted average value of a portion of the movement information s(i) according to weighted information (Wi) through the average calculator (2113) to obtain a first peak value (VH) and a second peak value (VL) of the portion of the movement information s(i);
    calculate an average value of the first peak value (VH) and the second peak value (VL) through the average calculator (2113) and generate an offset value (OFFSET) of the movement information s(i); and
    calculate a difference between a first target value (TGV1) and the first peak value (VH) and a difference between a target offset value and the offset value (OFF) to generate the error information (ER_Inf).

7. The driving device of claim 5 or 6, wherein the control circuit (111) comprises:

    a first control circuit (2111) configured to receive a gain error (Er_L) of the error information (ER_Inf) and execute the control algorithm for the gain error (ER_L) to generate updated gain information corresponding to the waveform information (WFMi); and
    a second control circuit (2112) configured to receive a shift error of the error information (ER_Inf) and execute the control algorithm for the shift error to generate updated offset information (OFFSET) corresponding to the waveform information (WFMi); and/or
    the control element (111) further comprises:
    a clock generator (2115) configured to receive the synchronization signal (Vsync) and provide a clock signal (CLK) to the error information calculator (2113) and the waveform information generator (2114) according to the synchronization signal.

8. The driving device of claim 5, 6 or 7, wherein the control element (111) further comprises a register (REG1) is coupled to the waveform information generator (2114), the waveform information generator (2114) is configured to receive segment length information (SEG) from the register (REG1), and the waveform information generator (2114) is configured to control a duration of the offset information (OFFET) and the gain information (GAIN) of the waveform information (WFMi) in each time segment based on the segment length information (SEG) and the clock signal (CLK).

9. The driving device of any one of the preceding claims, wherein the driving waveform signal generator (112) comprises:

a signal format converter (2121) coupled to the control element (111) and configured to convert a signal format of the waveform information (WFMi) and generate converted waveform information (CWFMi); and
an amplifier (2122) coupled to the signal format converter (2121) and configured to amplify the converted waveform information (CWFMi) to generate the driving waveform signal (DRV), preferably the waveform information (WFMi) is a digital signal, and the converted waveform information (CWFMi) is an analog signal.

10. The driving device of any one of the preceding claims, further comprising another driving waveform signal generator (612-1) and another control element (611-2), wherein the optical actuator (620) has another sensor (623-2), wherein the optical actuator (620), the other driving waveform signal generator (612-2), and the other control element (611-2) form a second closed loop, the optical actuator (620) is configured to drive the optical path shift element (621) to swing around a first axial direction according to the driving waveform signal (DRV) from the first closed loop, drive the optical path shift element (621) to swing around a second axial direction according to the driving waveform signal (DRV) from the second closed loop, and the first axial direction is different from the second axial direction.

11. A projection device, comprising the driving device (110) of any one of the preceding claims and the optical actuator (120), the optical actuator (120) comprising a sensor (123) and an optical path shift element (121), wherein the optical actuator (120) is configured to receive an image beam (IB) from a light valve (15) and to output image beam (IB) to a projection lens (16), preferably the sensor (123) of the optical actuator (120) is a magnetic flux sensor.

12. A driving method, configured to drive an optical actuator (120) through a driving device (110), wherein the optical actuator (120) is configured to receive an image beam (IB) and has a sensor (123) and an optical path shift element (121), the driving device (110) comprises a driving waveform signal generator (112) and a control element (111), and the driving method comprises:

providing a driving waveform signal (DRV) to the optical actuator (120) through the driving waveform signal generator (112) according to waveform information (WFMi);
receiving the driving waveform signal (DRV) and driving the optical path shift element (121) to operate according to the driving waveform signal (DRV) to shift the image beam (IB) through the optical actuator (120);
sensing position information (PSF) of the optical path shift element (121) and feeding back the position information (PSF) to the control element (111) through the sensor (123);
generating updated waveform information (WFMi) based on a synchronization signal (Vsync) and the position information (PSF) through the control element (111);
receiving and providing the updated waveform information (WFMi), and providing an updated driving waveform signal (DRV) to the optical actuator (120) according to the updated waveform information (WFMi) through the driving waveform signal generator (112), wherein the optical actuator (120), the driving waveform signal generator (112), and the control element (111) form a first closed loop; and
wherein a period during which the optical path shift element (121) is operated comprises an initial period (TINI) and a stable period (TSTB) in order, so that a maximum amplitude value of the driving waveform signal (DRV) in the initial period (TINI) is less than or equal to a maximum amplitude value of the driving waveform signal (DRV) in the stable period (TSTB).

13. The driving method of claim 12, further comprising:

calculating a difference between the position information (PSF) and initial position information (OFFi) to obtain movement information s(i) of the optical path shift element (121) of the optical actuator (120) through the control element (111);
calculating a weighted average value of a portion of the movement information s(i) according to weighted information (Wi) to obtain a first peak value (VH) and a second peak value (VL) corresponding to the portion of the movement information s(i) through the control element (111); and
calculating an average value of the first peak value (VH) and the second peak value (VL) and generate an offset value (OFFSET) of the movement information s(i) through the control element (111).

**14.** The driving method of claim 13, further comprising:

calculating a difference between a first target value (TGV1) and the first peak value (VH) and a difference between a target offset value and the offset value (OFFSET) to generate error information (ER_Inf) through the control element (111), and/or

executing a control algorithm for the error information (ER_Inf) to generate the waveform information (WFMi) through the control element (111),

preferably the target offset value is equal to an average value of the first target value (TGV1) and a second target value (TGV2),

**15.** The driving method of claim 12, 13 or 14, further comprising:

generating a clock signal (CLK) according to the synchronization signal (Vsync) through the control element (111); and

controlling a duration of offset information (OFFSET) and gain information (GAIN) of the waveform information (WFMi) in each time segment based on segment length information (SEG) and the clock signal (CLK) through the control element (111).

FIG. 1

FIG. 2

EP 4 593 371 A1

WFMi

FIG. 3A

DC4

DC3

DC2

DC1

T1 T2 T3 T4 • • • •

FIG. 3B

FIG. 4

FIG. 5

FIG. 6

EP 4 593 371 A1

Provide a driving waveform signal to an optical actuator at a driving waveform signal generator according to waveform information; receive the driving waveform signal at the optical actuator and drive an optical path shift element to operate according to the driving waveform signal to shift an image beam — S710

Sense position information of the optical path shift element at a sensor and feed back the position information to a control element — S720

Generate updated waveform information at the control element based on a synchronization signal and the position information; receive and provide the updated waveform information at the driving waveform signal generator, and provide an updated driving waveform signal to the optical actuator according to the updated waveform information, wherein the optical actuator, the driving waveform signal generator, the sensor, and the control element form a first closed loop; a period in which the optical path shift element is operated includes an initial period and a stable period in order, so that a maximum amplitude value of the driving waveform signal in the initial period is less than or equal to a maximum amplitude value of the driving waveform signal in the stable period — S730

FIG. 7

**EUROPEAN SEARCH REPORT**

Application Number

EP 25 15 1447

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/096449 A1 (HIRAKURA TAKAO [JP]) 1 April 2021 (2021-04-01) | 1,9-12 | INV. H04N9/31 |
| A | * figures 1-4 * <br> * paragraph [0021] - paragraph [0032] * <br> * paragraph [0036] * <br> * paragraph [0046] - paragraph [0054] * <br> * figure 7 * <br> * figure 11 * <br> * paragraph [0057] - paragraph [0062] * <br> * figure 8 * | 2-8, 13-15 | |
| A | US 2016/306269 A1 (GYOTEN TAKAAKI [JP] ET AL) 20 October 2016 (2016-10-20) <br> * figure 1 * <br> * figure 2 * <br> * figure 4 * <br> * figure 8 * <br> * figure 11 * <br> * paragraph [0031] - paragraph [0036] * <br> * paragraph [0043] - paragraph [0053] * <br> * paragraph [0056] - paragraph [0062] * <br> * figure 18 * <br> * paragraph [0095] - paragraph [0109] * <br> * figure 7 * | 1-15 | |

TECHNICAL FIELDS SEARCHED (IPC)

H04N
G09G

The present search report has been drawn up for all claims

| Place of search | Date of completion of the search | Examiner |
|---|---|---|
| The Hague | 27 May 2025 | Lim, Johan |

## ANNEX TO THE EUROPEAN SEARCH REPORT
## ON EUROPEAN PATENT APPLICATION NO.

EP 25 15 1447

This annex lists the patent family members relating to the patent documents cited in the above-mentioned European search report.
The members are as contained in the European Patent Office EDP file on
The European Patent Office is in no way liable for these particulars which are merely given for the purpose of information.

27-05-2025

| Patent document cited in search report | Publication date | Patent family member(s) | | Publication date |
|---|---|---|---|---|
| US 2021096449 A1 | 01-04-2021 | CN | 112578614 A | 30-03-2021 |
| | | JP | 7052784 B2 | 12-04-2022 |
| | | JP | 2021056351 A | 08-04-2021 |
| | | US | 2021096449 A1 | 01-04-2021 |
| US 2016306269 A1 | 20-10-2016 | CN | 105849619 A | 10-08-2016 |
| | | JP | 6432744 B2 | 05-12-2018 |
| | | JP | WO2015098120 A1 | 23-03-2017 |
| | | US | 2016306269 A1 | 20-10-2016 |
| | | WO | 2015098120 A1 | 02-07-2015 |

EPO FORM P0459

For more details about this annex : see Official Journal of the European Patent Office, No. 12/82

**EP 4 593 371 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410114727